# EUROPEAN PATENT SPECIFICATION

(11) **EP 3 089 438 B1**
(45) Date of publication and mention of the grant of the patent: **18.10.2017**
(21) Application number: 15305652.8
(22) Date of filing: 28.04.2015
(51) Int. Cl.: H04M 19/08

(54) **IMMINENT FAILURE INDICATION FOR POWER SOURCING EQUIPMENT**
ANZEIGE VON DROHENDEM AUSFALL FÜR STROMQUELLENVORRICHTUNG
INDICATION DE DÉFAILLANCE IMMINENTE POUR ÉQUIPEMENT SOURCE D'ÉNERGIE

(43) Date of publication of application: 02.11.2016
(73) Proprietor: ALCATEL LUCENT, 92100 Boulogne-Billancourt (FR)
(72) Inventor: Vanderhaegen, Dirk, 2018 Antwerpen (BE); Hillaert, Bart, 2018 Antwerpen (BE); Troch, Wim, 2018 Antwerpen (BE)
(74) Representative: ALU Antw Patent Attorneys

(56) References cited:
- WO-A2-2006/044783
- US-A1- 2010 215 359
- US-A1- 2014 314 412

## Description

### Technical Field of the Invention

The present invention relates to remote power feeding of access nodes from subscriber premises for broadband communication services.

### Technical Background of the Invention

Distribution Point Units (DPU) serving subscribers with new copper access technologies for broadband communication services, such as Digital Subscriber Loop (xDSL) or G.fast communication services, are typically deployed at a maximal distance of a few hundreds meters from the subscriber premises in order to achieve the expected high data rates. This means that the DPU will be located closer to the subscriber premises compared to current deployments. A local power supply to power the DPU is not always available. Therefore operators are requesting methods to feed the DPU via Reverse Power Feeding (RPF).

A Power Sourcing Equipment (PSE) installed at the user side provides a DC current to power the DPU via the same copper pair as used for broadband communication services. A Power Supply Unit (PSU) inside the DPU converts the DC voltage supplied by the PSE, typically 57V minus the DC voltage drop caused by the DC resistance of the copper pair, to a number of lower DC voltages further used inside the DPU (e.g., 12v, 5v, 3,3v, etc).

The PSE is powered via the AC mains power supply at the subscriber premises. The PSE is required to transmit a DYING GASP notification to the DPU when the AC mains is disconnected from the PSE. The disconnection of the AC mains can be intentional, for instance when a user switches off the PSE at night, or unintentional, for instance when an AC power failure takes place in a complete neighborhood of the user. In both cases, the DYING GASP notification shall be transmitted from the PSE to the DPU.

when the DPU receives the DYING GASP notification from the PSE, the DPU shall relay this information further towards a Network Management System (NMS). This should be done with as little a possible delay. Indeed, there are cases where only one user is connected to a DPU, and thus this DPU is powered by only one PSE. when the AC mains is disconnected from that last PSE, the DPU will also be out of power shortly after the PSE stops delivering power to the DPU.

Typically, a PSE includes an electro-magnetic energy storage device (or power accumulator), such as one or more electrolytic capacitors, configured to sustain the operation of the PSE for a short period of time once the AC mains is disconnected. After some time however, the capacitors become depleted and the output DC voltage reduces up to a point where the DPU is no longer powered. Beforehand, at least one DYING GASP notification should be sent to the DPU indicating an AC mains failure at the PSE. Similarly, the DPU also includes a power accumulator for powering the DPU when RPF is no longer available, and that can power the DPU to interalia forward the DYING GASP notification to the NMS. The capacitors that are used to store energy to handle the DYING GASP notifications when power is gone add cost and size to the PSE and to the DPU. Especially at the DPU side, size is very important and should be minimized as much as possible.

Also, a given amount of time (in the order of 50ms to 75ms) is typically defined for confirming the AC mains outage. The reasoning behind is the fact that the PSE should be able to cope with AC mains being not available for a few AC cycles (1 cycle = 20ms for 50Hz AC).

A Communication-Based Start-Up (CBSU) protocol has been defined to start-up RPF. It is proposed that the CBSU communication channel uses a number of tones (or carriers) in a frequency band between 20kHz and 100kHz modulated as Differential Binary Phase Shift Keying (DBPSK), similar to G.hs handshake tones in xDSL, with a baud rate of around 540 symbols per second. The CBSU could also be used for DYSING GASP notification between the PSE and the PSU, but there are a number of drawbacks with this solution. The CBSU should be enabled during normal RPF operation and not only during RPF startup. This means that this communication protocol should be compatible with any xDSL or G.fast communication services, including the startup and handshake phases of xDSL or G.fast communication services. The power consumption in the DPU is very critical once the PSE stops delivering power. Communication protocol based on modulated tones require a transceiver that can modulate or demodulate this information, which in turns requires adequate power accumulators in the PSE and the DPU.

The following background art, which may be regarded as useful for understanding the present invention and its relationship to the prior art, is further acknowledged and briefly discussed.

The US patent application entitled *"*System and Method for a subscriber-Powered Network Element" filed on September 12, 2013, and published on October 23, 2014 with publication number US 2014/0314412 A1, discloses a system and method for powering a network element of a fiber optic wide area network. when communication data is transferred between a central office and a subscriber terminal using a network element to convert optical to electrical (O-E) and electrical to optical (E-O) signals between a fiber from the central office and twisted wire pair, coaxial cable or Ethernet cable transmission lines from the subscriber terminal, techniques related to local powering of a network element or drop site by the subscriber terminal or subscriber premise remote powering device are provided. Certain advantages are achieved, such as freedom from any requirement for additional meter installations or meter connection charges and does not require a separate power network.

The International patent application entitled *"System and Method of Polarity Reversal for Reload Detection"* filed on October 17, 2005, and published on April 27, 2006 with publication number WO 2006/044783 A2, discloses a system and method to remotely activate a procedure, preferably to reload, a transceiver unit powered with an Ethernet cable. The system and method includes power source including circuitry to reverse the polarity of voltage for a desired amount of time to a detection circuit in the transceiver unit. Upon successful detection, a reload circuit preferably in the transceiver unit activates the reload procedure in the transceiver unit.

### Summary of the Invention

It is an object of the present invention to provide an efficient way for sending imminent failure indications to a DPU that can be easily generated by the PSE and easily decoded by the PSU with a limited amount of circuitry and power.

In accordance with a first aspect of the invention, a power sourcing equipment comprises a power injector configured to generate a power feeding signal from a power source for remote power feeding of an access node through a subscriber loop, and a detector configured to detect a power outage of the power source. The power injector is further configured, upon detection of the power outage, to generate an imminent failure indication signal by at least one polarity inversion of the power feeding signal for further detection by the access node.

Such a power sourcing equipment can be manufactured as a standalone equipment, or can be part of a Customer Premises Equipment (CPE), such as a modem, a router, etc.

In accordance with another aspect of the invention, an access node for providing communication services to subscribers over a plurality of subscriber loops comprises a power extractor for extracting power from a power feeding signal generated by a remote power sourcing equipment over a subscriber loop of the plurality of the subscriber loops for remote power feeding of the access node. The access node further comprises a detector configured to detect at least one polarity inversion of the power feeding signal, and a signaling means coupled to the detector and configured, upon detection of the at least one polarity inversion of the power feeding signal, to issue an alert message to a network manager indicative of an imminent failure of the power sourcing equipment.

Such an access node typically refers to a DPU, or to a Digital Subscriber Line Access Multiplexer (DSLAM) deployed at a remote location, sometimes also referred to as an Optical Network Unit (ONU) or as a Remote Terminal (RT).

In one embodiment of the invention, the at least one polarity inversion of the power feeding signal comprises a single polarity inversion.

In one embodiment of the invention, the at least one polarity inversion of the power feeding signal comprises two or more polarity inversions conforming to a pre-determined time pattern.

In one embodiment of the invention, the at least one polarity inversion has a controlled slope.

In one embodiment of the invention, the power injector is further configured to issue the imminent failure indication signal after the power outage persists beyond a given period of time.

In one embodiment of the invention, the power sourcing equipment further comprises a power accumulator configured to deliver power to the power injector during the power outage for generation of the imminent failure indication signal.

In one embodiment of the invention, the power accumulator comprises one or more capacitors.

In one embodiment of the invention, the imminent failure indication signal is for notification of the imminent unavailability of the power feeding signal to the access node.

In one embodiment of the invention, the power feeding signal is a DC signal.

In one embodiment of the invention, the power sourcing equipment further comprises a low-pass filter for frequency-multiplexing the power feeding signal with a Discrete Multi-Tone (DMT) communication signal over the subscriber loop.

In one embodiment of the invention, the signaling means is further configured to issue the alert message only in the event of no other power feeding signal being available on another subscriber loop.

In one embodiment of the invention, the access node further comprises a power accumulator configured to deliver power to the power extractor to accommodate the at least one polarity inversion.

The present invention specifically focuses on the use of voltage reversals of the DC power supply voltage in order to robustly inform the remote DPU about the imminent unavailability of the RPF function over a subscriber loop. when the AC mains is persistently detected as being no longer available, the PSE sends a DYING GASP signal to the DPU by reversing the DC voltage at the output of the PSE.

By so doing, only basic circuitry, minimum power and minimum time is required to carry the DYING GASP signal over the subscriber loop to the remote DPU. As the available RMS power is not altered by the voltage reversal (the available RMS power is however slightly reduced on account of the low-pass filter that puts a lower bound on the voltage transition time), plenty of power is available to the DPU for still some period of time for the DPU to notify in turn the NMS about the power outage (either partial power outage of the DPU if power can still be drained from another subscriber loop, or total power outage of the DPU if this was the last available RPF source).

The DC voltage can be reversed only once, or the DC voltage can be reversed several times following a specific time pattern if one wants to make the DYING GASP communication even more robust (e.g., a given minimum number of evenly-spaced voltage reversals). Yet, with the latter, more power and additional hardware circuitry are required to generate such DYING GASP signals.

### Brief Description of the Drawings

The above and other objects and features of the invention will become more apparent and the invention itself will be best understood by referring to the following description of an embodiment taken in conjunction with the accompanying drawings wherein:
- fig. 1 represents a broadband communication system making use of RPF;
- fig. 2 represents further details at the subscriber side;
- fig. 3 represents further details at the network side; and
- fig. 4 represents a plot of the RPF voltage versus time when the AC mains at the subscriber side gets unavailable.

### Detailed Description of the Invention

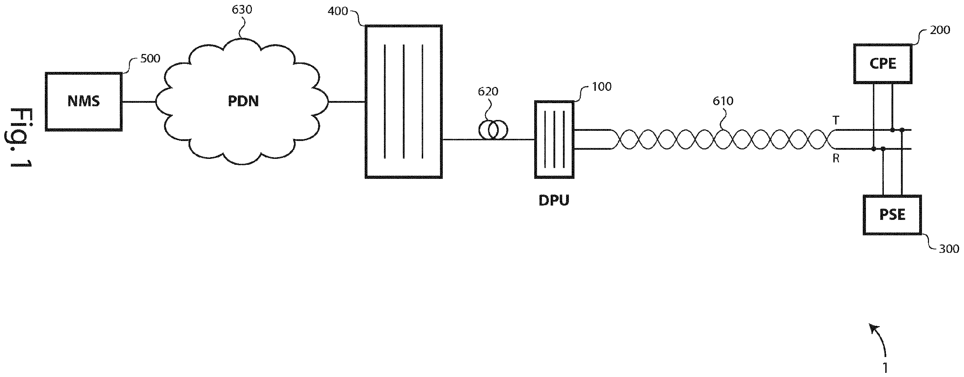

There is seen in fig. 1 a broadband communication system 1 comprising the following network elements:
- a DPU 100;
- a Customer Premises Equipment (CPE) 200;
- a PSE 300;
- a network unit 400; and
- a NMS 500.

The DPU 100 is for providing broadband communication services over a copper loop plant to a plurality of subscribers. Presently, the DPU 100 is coupled to the CPE 200 and to the PSE 300 via a common Unshielded Twisted copper Pair (UTP) 610. The two wires of the UTP 610 are referred to as the TIP (T) and the RING (R) of the subscriber loop.

The DPU 100 is further coupled to the network unit 400 via one or more optical fibers 620, and further to the NMS 500 via a Packet Data Network (PDN) 630.

The NMS 500 is for monitoring the operation and performance of the broadband communication system 1, and for identifying the correct causes of the various failures occurring in the broadband communication system 1.

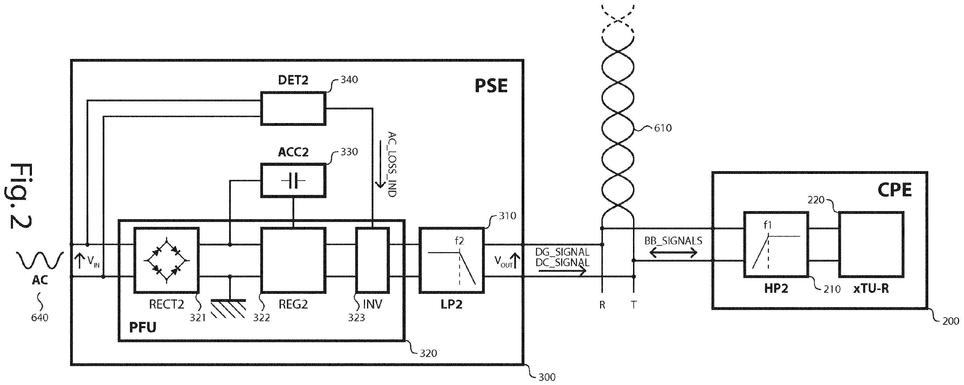

There is seen in fig. 2 further details at the subscriber side.

The CPE 200 includes:
- a high-pass filter 210 (or HP2) with a first cut-off frequency f1; and
- a transceiver 220 (or xTU-R) for establishing and operating a bi-directional broadband communication channel over the subscriber loop 610.

A first pair of terminals of the high-pass filter 210 is coupled to the subscriber loop 610, and a second pair of terminals of the high-pass filter 210 is coupled to the transceiver 220.

The high-pass filter 210 is designed to let broadband communication signals BB_SIGNALS pass through, while exhibiting a high-impedance for low-frequency signals, such as a DC power feeding signal DC_SIGNAL supplied by the PSE 300. Typical values for the cut-off frequency f1 is 25kHz (xDSL over POTS), 125kHz (xDSL over ISDN), or 2MHz (G.fast).

The PSE 300 includes:
- a low-pass filter 310 (or LP2) with a second cut-off frequency f2 strictly lower than f1;
- a power feeding unit 320 (or PFU);
- a power accumulator 330 (or ACC2); and
- a detector 340 (or DET2).

A first pair of terminals of the low-pass filter 310 is coupled to the subscriber loop 610, and a second pair of terminals of the low-pass filter 310 is coupled to the power feeding unit 320.

The low-pass filter 310 is designed to let the DC power signal DC_SIGNAL pass through, while exhibiting a high-impedance for higher frequency signals, such as the broadband communication signals BB_SIGNALS. A typical value for the cut-off frequency f2 is 200Hz (with POTS), or 3-4kHz (without POTS).

The power feeding unit 320 is further coupled through a third pair of terminals to an AC mains 640, such as a 220Vrms or 120Vrms AC power source.

The power feeding unit 320 is for converting the AC mains 640 into a DC voltage DC_SIGNAL, typically 57V, for remote power feeding of the DPU 100 through the subscriber loop 610. The power feeding unit typically includes a rectifier 321 (or RECT2) for rectifying the voltage swings of the AC mains 640, a voltage regulator 322 (or REG2) for regulating the DC output voltage DC_SIGNAL to an almost-constant value, and a voltage inverter 323 (or INV) for inverting the polarity of the DC output voltage upon detection of a power outage of the AC mains 640.

The voltage regulator 322 is further configured to generate the necessary DC voltage levels for the operation of the PSE 300.

The voltage inverter 323 can for instance be implemented as a H-bridge, whose input is coupled to the DC output of the voltage regulator 322, and whose output is coupled to the second pair of terminals of the low-pass filter 310.

The power accumulator 330 is coupled to the power feeding unit 320. More specifically, the power accumulator 330 is coupled to the output of the rectifier 321 and to the voltage regulator 322. The power accumulator 330 delivers power to the voltage regulator 322, which is designed to drain the necessary current to produce the various DC output voltages either from the AC mains 640 or from the power accumulator 330.

The power accumulator 330 is designed to accumulate electro-magnetic energy when the AC mains 640 is ON, and to further release that electro-magnetic energy to the voltage regulator 322 whenever the AC mains 640 is OFF in order to sustain the operation of the voltage regulator 322 for a short period of time, typically a few tens ms up to a few hundreds ms.

The power accumulator 330 typically includes one or more electrolytic capacitors (or alike) coupled in parallel. The power accumulator 330 may further include a voltage booster for efficiently charging the capacitors.

The detector 340 is coupled to the AC mains for power outage detection, and is configured to generate an AC_LOSS_IND signal for control of the voltage inverter 323. when the AC_LOSS_IND signal is OFF (i.e., the AC mains is available) then the voltage inverter is in a normal state and the polarity of the DC output voltage DC_SIGNAL from the voltage regulator 322 is left unchanged. when the AC_LOSS_IND signal is ON (i.e., the AC mains is unavailable) then the voltage inverter is in an inverted state and the polarity of the DC output voltage DC_SIGNAL from the voltage regulator 322 is reversed.

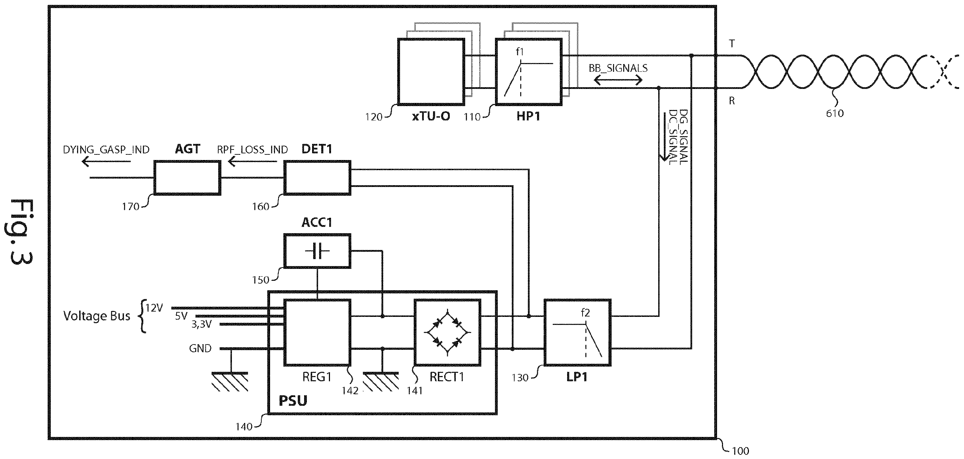

The polarity inversion of the DC output voltage DC_SIGNAL is indicative of an imminent failure of the RPF function over the subscriber loop 610, and is denoted as DG_SIGNAL in fig. 2 and 3.

Alternatively, there can be more than one polarity inversions following some pre-defined time-pattern. In this case, more complex hardware circuitry (inc. some additional clock timing circuitry) is required and the amount of consumed power is higher.

Also, the slope of the DC output voltage inversion shall be closely controlled in order to avoid any impulse noise that may impair the operation of neighboring equipment through electro-magnetic radiation. The right balance shall be achieved between on one hand a steep slope for almost constant RMS power, and on the other hand a smooth slope for impulse noise avoidance. In addition, the DYING GASP signal DG_SIGNAL shall go through the low-pass filters 130 and 310, which put an upper bound on the allowed voltage transition time.

There is seen in fig. 3 further details at the network side.

The DPU 100 includes:
- a high-pass filter 110 (or HP1) with the first cut-off frequency f1; and
- a transceiver 120 (or xTU-O) for establishing and operating a bi-directional broadband communication channel over the subscriber loop 610 with the peer transceiver 220.

A first pair of terminals of the high-pass filter 110 is coupled to the subscriber loop 610, and a second pair of terminals of the high-pass filter 110 is coupled to the transceiver 120.

The high-pass filter 110 is designed to let the broadband communication signals BB_SIGNALS pass through, while exhibiting a high-impedance for the low-frequency signals, such as the DC power feeding signal DC_SIGNAL and the DYING GASP signal DG_SIGNAL supplied by the PSE 300.

The DPU 100 further includes:
- a low-pass filter 130 (or LP1) with the second cut-off frequency f2;
- a power supply unit 140 (or PSU);
- a power accumulator 150 (or ACC1);
- a detector 160 (or DET1); and
- a NMS agent 170 (or AGT).

A first pair of terminals of the low-pass filter 130 is coupled to the subscriber loop 610, and a second pair of terminals of the low-pass filter 130 is coupled to the power supply unit 140.

The low-pass filter 130 is designed to let the DC power feeding signal DC_SIGNAL and the DYING GASP signal DG_SIGNAL from the PSE 300 pass through, while exhibiting a high-impedance for higher frequency signals, such as the broadband communication signals BB_SIGNALS.

The power supply unit 140 is configured to generate the necessary DC voltage levels used within the DPU 100 (e.g., 12v, 5v, 3,3v, etc) from the power feeding signals present on one or more subscriber loops.

The power supply unit 140 typically includes a rectifier 141 (or RECT1) to accommodate for the unknown polarity of the DC power feeding signal DC_SIGNAL, and one or more voltage regulators 142 (or REG1) for regulating the one or more DC voltages levels used internally within the DPU 100.

The power accumulator 150 is coupled to the power supply unit 140. More specifically, the power accumulator 150 is coupled to the output of the rectifier 141 and to the voltage regulator 142. The voltage regulator 142 is thus designed to drain the necessary current to produce the necessary voltage levels used internally by the DPU 100 either from the various PSEs or from the accumulator 150.

The power accumulator 150 is designed to accumulate electro-magnetic energy when the DPU is remotely powered by the various PSEs, and to further release that electro-magnetic energy to the voltage regulator 142 whenever RPF is no longer available in order to sustain the operation of the voltage regulator 142 for a short period of time, typically a few hundreds ms.

The power accumulator 150 typically includes a bank of electrolytic capacitors coupled in parallel. The power accumulator 150 may further include a voltage booster for efficiently charging the capacitors.

It is noteworthy that the power consumption of the DPU 100 scales with the number of active subscribers. when the DPU operation is only backed up by the power accumulator 150 (meaning no subscriber is active), it might be necessary to switch OFF some non-critical functions in the DPU 100 in order to save as much power as possible for DYING GASP notification towards the NMS 500.

The detector 160 is coupled to the second pair of terminals of the low-pass filter 130, and is configured to detect the DYING GASP signal DG_SIGNAL, presently implemented as a polarity inversion of the DC power feeding signal DC_SIGNAL supplied by the PSE 300, which is indicative of an imminent failure of the RPF function over the subscriber loop 610.

The detector 160 may be further configured to confirm the unavailability of the RPF function by monitoring the voltage level of the DC power feeding signal DC_SIGNAL: when the DC power feeding signal DC_SIGNAL is found to be lower than a given threshold, then the RPF function is confirmed as being unavailable over the subscriber loop 610.

Thereupon, the detector 160 issues a RPF_LOSS_IND notification towards the NMS agent 170, possibly including an indication as per whether this is the last available RPF source.

Alternatively, the detector 160 is configured to detect a succession of polarity inversions conforming to a pre-determined time pattern, making the detection of the DYING GASP signal more robust. Yet, there is enough robustness even with one single polarity inversion since known impairments are unlikely to induce any polarity inversion of the DC power feeding signal DC_SIGNAL.

The NMS agent is configured, upon receipt of RPF_LOSS_IND notification from the detector 160, to encode and issue an alert message DYING_GASP_IND towards the NMS 500. The alert message DYING_GASP_IND includes the necessary pieces of information for precisely identifying the cause of the RPF failure.

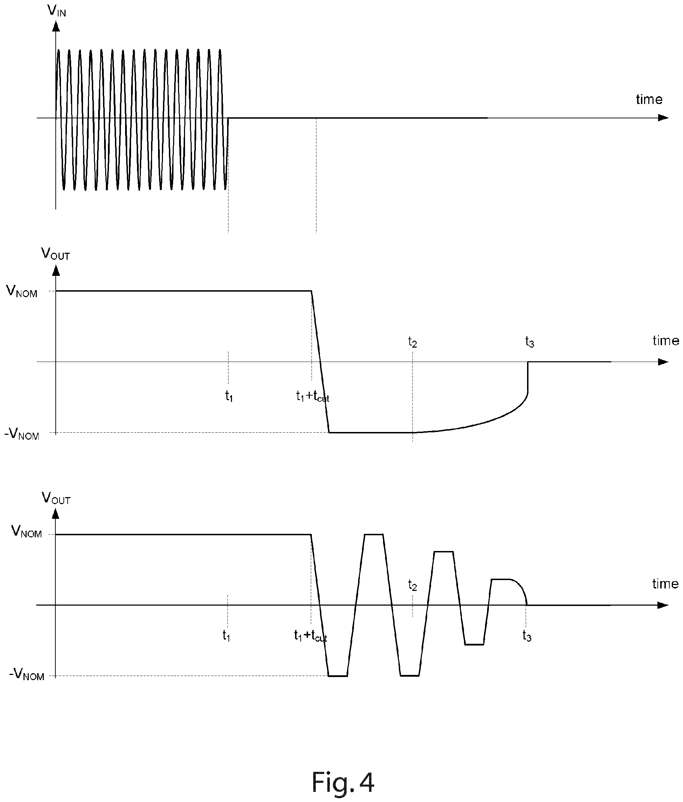

An operation of the RPF function over the subscriber loop 610 is now described with regard to fig. 4.

On top of fig. 4, the AC input voltage V_{IN} of the PSE 300 is plotted versus time. At time t₁, the AC mains 640 gets unavailable.

In the middle of fig. 4, the output voltage V_{OUT} of the PSE 300 is plotted versus time. At time t₁+t_{CUT}, wherein T_{CUT} denotes some persistency timer used to confirm the AC power outage, the AC mains 640 is detected as being unavailable by the detector 340. Consequently, the AC_LOSS_IND signal goes from OFF to ON, which commands the voltage inverter 323 to reverse the polarity of the output voltage V_{OUT}. The output voltage V_{OUT} then goes from V_{NOM} to -V_{NOM}, wherein V_{NOM} denotes the nominal voltage value used for RPF (typically 57_{V}). At time t₂, the voltage supplied by the power accumulator 330 is no longer sufficient to sustain the nominal voltage value V_{NOM}, and the output voltage V_{OUT} starts decreasing down to zero at time t₃.

In the bottom of fig. 4, the output voltage V_{OUT} of the PSE 300 is plotted versus time. In this embodiment, more than one polarity inversion evenly-spaced across time is used for notifying the imminent failure of the RPF function. As one can notice, the amplitude starts decreasing from time t₂ onwards.

It is to be noticed that the term 'comprising' should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled' should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures may be provided through the use of dedicated hardware as well as hardware capable of executing software in association with appropriate software. when provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, Digital Signal Processor (DSP) hardware, network processor, Application specific Integrated Circuit (ASIC), Field Programmable Gate Array (FPGA), etc. Other hardware, conventional and/or custom, such as Read Only Memory (ROM), Random Access Memory (RAM), and non volatile storage, may also be included.

## Claims

1. **A power sourcing equipment** (300) comprising **a power injector** (320) configured to generate **a power feeding signal** (DC_SIGNAL) from **a power source** (640) for remote power feeding of **an access node** (100) through **a subscriber loop** (610), and **a detector** (340) configured to detect **a power outage** of the power source, **characterized in that** the power injector is further configured, upon detection of the power outage, to generate **an imminent failure indication signal** (DG_SIGNAL) by **at least one polarity inversion** of the power feeding signal for further detection by the access node.

2. **A power sourcing equipment** (300) according to claim 1, *wherein* the at least one polarity inversion of the power feeding signal comprises **a single polarity inversion.**

3. **A power sourcing equipment** (300) according to claim 1, *wherein* the at least one polarity inversion of the power feeding signal comprises **two or more polarity inversions** conforming to **a pre-determined time pattern.**

4. **A power sourcing equipment** (300) according to claim 2 or 3, *wherein* the at least one polarity inversion has **a controlled slope.**

5. **A power sourcing equipment** (300) according to claim 1, *wherein* the power injector is further configured to issue the imminent failure indication signal after the power outage persists beyond **a given period of time** (t_{CUT}).

6. **A power sourcing equipment** (300) according to claim 1, *wherein* the power sourcing equipment further comprises **a power accumulator** (330) configured to deliver power to the power injector during the power outage for generation of the imminent failure indication signal.

7. **A power sourcing equipment** (300) according to claim 6, *wherein* the power accumulator comprises **one or more capacitors.**

8. **A power sourcing equipment** (300) according to claim 1, *wherein* the imminent failure indication signal is for notification of the imminent unavailability of the power feeding signal to the access node.

9. **A power sourcing equipment** (300) according to claim 1, *wherein* the power feeding signal is **a DC signal** (DC_SIGNAL).

10. **A power sourcing equipment** (300) according to claim 9, *wherein* the power sourcing equipment further comprises **a low pass filter** (310) for frequency-multiplexing the power feeding signal with **a Discrete Multi-Tone DMT communication signal** (BB_SIGNALS) over the subscriber loop.

11. **A customer premises equipment** (200) comprising **a power sourcing equipment** (300) according to any of the preceding claims.

12. **An access node** (100) for providing communication services to subscribers over **a plurality of subscriber loops,** and comprising **a power extractor** (140) for extracting power from **a power feeding signal** (DC_SIGNAL) generated by **a remote power sourcing equipment** (300) over **a subscriber loop** (610) of the plurality of the subscriber loops for remote power feeding of the access node, **characterized in that** the access node further comprises **a detector** (160) configured to detect at least one polarity inversion of the power feeding signal, and **a signaling means** (170) coupled to the detector and configured, upon detection of the at least one polarity inversion of the power feeding signal, to issue **an alert message** (DYING_GASP_IND) to **a network manager** (500) indicative of **an imminent failure** of the power sourcing equipment.

13. **An access node** (100) according to claim 12, *wherein* the signaling means is further configured to issue the alert message only in the event of no other power feeding signal being available on another subscriber loop.

14. **An access node** (100) according to claim 12, *wherein* the access node further comprises **a power accumulator** (150) configured to deliver power to the power extractor to accommodate the at least one polarity inversion.

15. **An access node** (100) according to any of claims 12 to 14, *wherein* the access node is **a Distribution Point Unit DPU** (100).

## Patentansprüche

1. **Stromquellenvorrichtung** (300) mit **einem Strominjektor** (320), der ausgelegt ist zum Erzeugen **eines Stromzufuhrsignals** (DC_SIGNAL) von **einer Stromquelle** (640) für die Fernstromzufuhr **eines Zugangsknotens** (100) über **eine Teilnehmerschleife** (610), und **einem Detektor** (340), der zum Erkennen **eines Stromausfalls** der Stromquelle ausgelegt ist,
**dadurch gekennzeichnet, dass**
der Strominjektor weiterhin ausgelegt ist, um nach Erkennen des Stromausfalls ein **Anzeigesignal von drohendem Ausfall** (DG_SIGNAL) durch **mindestens eine Polaritätsumkehrung** des Stromzufuhrsignals zur weiteren Erkennung durch den Zugangsknoten zu erzeugen.

2. **Stromquellenvorrichtung** (300) nach Anspruch 1, *wobei* die mindestens eine Polaritätsumkehrung des Stromzufuhrsignals **eine einzelne Polaritätsumkehrung** umfasst.

3. **Stromquellenvorrichtung** (300) nach Anspruch 1, *wobei* die mindestens eine Polaritätsumkehrung des Stromzufuhrsignals **zwei oder mehrere Polaritätsumkehrungen** gemäß **einem vorausbestimmten Zeitmuster** umfasst.

4. **Stromquellenvorrichtung** (300) nach Anspruch 2 oder 3, *wobei* die mindestens eine Polaritätsumkehrung **eine gesteuerte Flanke** aufweist.

5. **Stromquellenvorrichtung** (300) nach Anspruch 1, *wobei* der Strominjektor weiterhin ausgelegt ist, um das Anzeigesignal von drohendem Ausfall auszugeben, nachdem der Stromausfall über **eine gegebene Zeitdauer** (T_{CUT}) hinaus anhält.

6. **Stromquellenvorrichtung** (300) nach Anspruch 1, *wobei* die Stromquellenvorrichtung weiterhin **einen Stromakkumulator** (330) umfasst, der ausgelegt ist, um den Strominjektor während des Stromausfalls zum Erzeugen des Anzeigesignals von drohendem Ausfall mit Strom zu versorgen.

7. **Stromquellenvorrichtung** (300) nach Anspruch 6, *wobei* der Stromakkumulator **einen oder mehrere Kondensatoren** umfasst.

8. **Stromquellenvorrichtung** (300) nach Anspruch 1, *wobei* das Anzeigesignal von drohendem Ausfall zur Meldung der drohenden Nichtverfügbarkeit des Stromzufuhrsignals an den Zugangsknoten dient.

9. **Stromquellenvorrichtung** (300) nach Anspruch 1, *wobei* das Stromzufuhrsignal ein **DC-Signal** (DC_SIGNAL) ist.

10. **Stromquellenvorrichtung** (300) nach Anspruch 9, *wobei* die Stromquellenvorrichtung weiterhin **einen Tiefpassfilter** (310) zum Frequenzmultiplexen des Stromzufuhrsignals mit **einem Mehrtonverfahren-DMT-Kommunikationssignal** (BB_SIGNALS) über die Teilnehmerschleife umfasst.

11. **Kundenendgerät** (200) mit **einer Stromquellenvorrichtung** (300) nach einem beliebigen der vorstehenden Ansprüche.

12. **Zugangsknoten** (100) zum Bereitstellen von Kommunikationsdiensten für Teilnehmer über **eine Vielzahl von Teilnehmerschleifen** und umfassend **einen Stromabzug** (140) zum Abziehen von Strom von **einem** von **einer entfernten Stromquellenvorrichtung** (300) erzeugten **Stromzufuhrsignal** (DC_SIGNAL) über **eine Teilnehmerschleife** (610) aus der Vielzahl von Teilnehmerschleifen zur Fernstromzufuhr des Zugangsknotens,
**dadurch gekennzeichnet, dass**
der Zugangsknoten weiterhin **einen Detektor** (160) umfasst, der ausgelegt ist zum Erkennen von mindestens einer Polaritätsumkehrung des Stromzufuhrsignals, und ein **Meldemittel** (170), das an den Detektor gekoppelt und ausgelegt ist, um nach Erkennen der mindestens einen Polaritätsumkehrung des Stromzufuhrsignals **eine Alarmnachricht** (DYING_GASP_IND) an **einen Netzwerkmanager** (500) auszugeben, die bezeichnend ist für **einen drohenden Ausfall** der Stromquellenvorrichtung.

13. **Zugangsknoten** (100) nach Anspruch 12, *wobei* das Meldemittel weiterhin ausgelegt ist, um die Alarmnachricht nur dann auszugeben, wenn kein anderes Stromzufuhrsignal auf einer anderen Teilnehmerschleife verfügbar ist.

14. **Zugangsknoten** (100) nach Anspruch 12, *wobei* der Zugangsknoten weiterhin **einen Stromakkumulator** (150) umfasst, der ausgelegt ist, um den Stromabzug mit Strom zu versorgen, um die mindestens eine Polaritätsumkehrung unterzubringen.

15. **Zugangsknoten** (100) nach einem beliebigen der Ansprüche 12 bis 14, *wobei* der Zugangsknoten **eine Verteilungspunkteinheit DPU** (100) ist.

## Revendications

1. **Équipement source d'énergie électrique** (300) comprenant **un injecteur d'énergie électrique** (320) configuré pour générer **un signal d'alimentation en énergie électrique** (DC_SIGNAL) à partir **d'une source d'énergie électrique** (640) pour l'alimentation en énergie électrique distante **d'un noeud d'accès** (100) à travers **une boucle d'abonné** (610), et **un détecteur** (340) configuré pour détecter **une panne de courant** de la source d'énergie électrique,
**caractérisé en ce que**
l'injecteur d'énergie électrique est en outre configuré, lors de la détection de la panne de courant, pour générer **un signal d'indication de défaillance imminente** (DG_SIGNAL) par **au moins une inversion de polarité** du signal d'alimentation en énergie électrique pour une autre détection par le noeud d'accès.

2. **Équipement source d'énergie électrique** (300) selon la revendication 1, *dans lequel* l'au moins une inversion de polarité du signal d'alimentation en énergie électrique comprend une inversion de polarité unique.

3. **Équipement source d'énergie électrique** (300) selon la revendication 1, *dans lequel* l'au moins une inversion de polarité du signal d'alimentation en énergie électrique comprend **au moins deux inversions de polarité** conformes à **une chronologie prédéterminée.**

4. **Équipement source d'énergie électrique** (300) selon la revendication 2 ou 3, *dans lequel* l'au moins une inversion de polarité a **une pente contrôlée.**

5. **Équipement source d'énergie électrique** (300) selon la revendication 1, *dans lequel* l'injecteur d'énergie électrique est en outre configuré pour délivrer le signal d'indication de défaillance imminente après que la panne de courant a persisté au-delà **d'une période donnée** (t_{CUT}).

6. **Équipement source d'énergie électrique** (300) selon la revendication 1, *dans lequel* l'équipement source d'énergie électrique comprend en outre **un accumulateur d'énergie électrique** (330) configuré pour délivrer de l'énergie électrique à l'injecteur d'énergie électrique durant la panne de courant pour la génération du signal d'indication de défaillance imminente.

7. **Équipement source d'énergie électrique** (300) selon la revendication 6, *dans lequel* l'accumulateur d'énergie électrique comprend **un ou plusieurs condensateurs.**

8. **Équipement source d'énergie électrique** (300) selon la revendication 1, *dans lequel* le signal d'indication de défaillance imminente est destiné à la notification de l'indisponibilité imminente du signal d'alimentation en énergie électrique au noeud d'accès.

9. **Équipement source d'énergie électrique** (300) selon la revendication 1, *dans lequel* le signal d'alimentation en énergie électrique est un signal CC (DC_SIGNAL).

10. **Équipement source d'énergie électrique** (300) selon la revendication 9, *dans lequel* l'équipement source d'énergie électrique comprend en outre **un filtre passe-bas** (310) pour le multiplexage fréquentiel du signal d'alimentation en énergie électrique avec **un signal de communication à multitonalité discrète DMT** (BB_SIGNALS) sur la boucle d'abonné.

11. **Équipement des locaux d'abonné** (200) comprenant **un équipement source d'énergie électrique** (300) selon l'une quelconque des revendications précédentes.

12. **Noeud d'accès** (100) pour fournir des services de communication à des abonnés sur **une pluralité de boucles d'abonné,** et comprenant un **extracteur d'énergie électrique** (140) pour extraire de l'énergie électrique **d'un signal d'alimentation en énergie électrique** (DC_SIGNAL) généré par **un équipement source d'énergie électrique distant** (300) sur **une boucle d'abonné** (610) parmi la pluralité des boucles d'abonné pour l'alimentation en énergie électrique distante du noeud d'accès, **caractérisé en ce que**
le noeud d'accès comprend en outre **un détecteur** (160) configuré pour détecter au moins une inversion de polarité du signal d'alimentation en énergie électrique, et **un moyen de signalisation** (170) couplé au détecteur et configuré, lors de la détection de l'au moins une inversion de polarité du signal d'alimentation en énergie électrique, pour délivrer **un message d'alerte** (DYING_GASP_IND) à **un gestionnaire de réseau** (500) indiquant **une défaillance imminente** de l'équipement source d'énergie électrique.

13. **Noeud d'accès** (100) selon la revendication 12, *dans lequel* le moyen de signalisation est en outre configuré pour délivrer le message d'alerte seulement si aucun autre signal d'alimentation en énergie électrique n'est disponible sur une autre boucle d'abonné.

14. **Noeud d'accès** (100) selon la revendication 12, *dans lequel* le noeud d'accès comprend en outre **un accumulateur d'énergie électrique** (150) configuré pour délivrer de l'énergie électrique à l'extracteur d'énergie électrique pour permettre l'au moins une inversion de polarité.

15. **Noeud d'accès** (100) selon l'une quelconque des revendications 12 à 14, *dans lequel* le noeud d'accès est **une unité de point de distribution DPU** (100).
